# EUROPÄISCHE PATENTANMELDUNG

(11) **EP 2 605 064 A2**
(43) Veröffentlichungstag der Anmeldung: **19.06.2013**
(21) Anmeldenummer: 12195281.6
(22) Anmeldetag: 03.12.2012
(51) Int. Cl.: G03B 17/56, G03B 17/18, H04N 5/232

(54) **Bedieneinheit**

(30) Priorität: 13.12.2011 DE 102011121021
(71) Anmelder: ARNOLD & RICHTER CINE TECHNIK GMBH & CO. BETRIEBS KG, 80799 München (DE)
(72) Erfinder: Voss, Hendrik, 81673 München (DE)
(74) Vertreter: Manitz, Finsterwald & Partner GbR

(57) **Zusammenfassung**

Eine Bedieneinheit zur Erzeugung eines Steuersignals umfasst ein Basisteil 12, ein um eine Drehachse relativ zum Basisteil 12 drehbares Bedienelement 18, einen Positionsgeber zum Erfassen einer Winkelposition oder einer Winkelpositionsänderung des Bedienelements 18 relativ zum Basisteil 12, eine Steuereinrichtung, welche angepasst ist, in Abhängigkeit von der erfassten Winkelposition oder Winkelpositionsänderung des Bedienelements 18 das Steuersignal zu erzeugen, und eine elektronische Anzeigeeinrichtung 16, wobei die Steuereinrichtung angepasst ist, die elektronische Anzeigeeinrichtung 16 zum Darstellen zumindest einer Symbolanordnung anzusteuern. Die Bedieneinheit ist dadurch gekennzeichnet, dass die elektronische Anzeigeeinrichtung 16 die Form eines Zylinders oder eines Zylindersektors besitzt, dessen Achse mit der Drehachse des Bedienelements 18 zusammenfällt oder parallel hierzu verläuft.

## Beschreibung

Die vorliegende Erfindung betrifft eine Bedieneinheit zur Erzeugung eines Steuersignals, umfassend ein Basisteil, ein um eine Drehachse relativ zum Basisteil drehbares Bedienelement, einen Positionsgeber zum Erfassen einer Winkelposition oder einer Winkelpositionsänderung des Bedienelements relativ zum Basisteil, eine Steuereinrichtung, welche angepasst ist, in Abhängigkeit von der erfassten Winkelposition oder Winkelpositionsänderung des Bedienelements das Steuersignal zu erzeugen, und eine elektronische Anzeigeeinrichtung, wobei die Steuereinrichtung angepasst ist, die elektronische Anzeigeeinrichtung zum Darstellen zumindest einer Symbolanordnung anzusteuern.

Derartige Bedieneinheiten ermöglichen es, dem Bedienelement spezifische Symbole (z.B. Zahlen, Buchstaben und/oder Skalen) zuzuordnen, wobei die konkrete Auswahl der Symbole in Abhängigkeit von einer jeweiligen Bediensituation oder benutzergesteuert erfolgen kann. Mithilfe des Bedienelements kann eine einem bestimmten Symbol entsprechende Funktion selektiert oder aktiviert werden, oder es kann beispielsweise ein Einstellwert aus einem mittels einer Skala dargestelltem Einstellwertebereich ausgewählt werden. Ein entsprechendes Steuersignal wird beispielsweise an eine der Bedieneinheit zugeordnete Funktionseinheit übermittelt.

Derartige Bedieneinheiten finden in allen Bereichen der Technik Anwendung, beispielsweise in Kraftfahrzeugen, in der Luftfahrt, in der Schifffahrt und für die Bedienung oder Steuerung von Maschinen oder elektrischen oder elektronischen Geräten. Eine vorteilhafte Anwendung liegt insbesondere in der Filmindustrie.

So kann beispielsweise bei herkömmlichen Laufbildkameras (Filmkameras) oder elektronischen Laufbildkameras eine Einstellung des Fokus (Bildschärfe) durch Verdrehen eines Objektivrings am Objektiv der Laufbildkamera vorgenommen werden. Oftmals erfolgt jedoch die Fokuseinstellung mit Hilfe einer an der Laufbildkamera vorgesehenen Fokuseinstellvorrichtung, die über eine auch als Schärfenzieheinrichtung bezeichnete, von einem Kameraassistenten betätigte Bedieneinheit gesteuert wird. Die Fokuseinstellvorrichtung weist eine Motoreinheit auf, die dafür ausgelegt ist, den Objektivring zu verdrehen und auf diese Weise eine Fokuseinstellung zu bewirken. Die Bedieneinheit mit dem eigentlichen Bedienelement kann in einer bedienerfreundlichen Position an der Laufbildkamera selbst angeordnet oder als eine Fernbedieneinheit ausgebildet sein, die für eine drahtgebundene oder drahtlose Kommunikation mit der Laufbildkamera ausgelegt ist.

Die Fokuseinstellvorrichtung verfügt über Mittel, entsprechende Steuersignale von der Bedieneinheit zu empfangen und in entsprechende Steuerbefehle an die Motoreinheit umzusetzen. Optional kann zwischen der Fokuseinstellvorrichtung und der Bedieneinheit eine bidirektionale Kommunikation vorgesehen sein, so dass auch Daten, wie zum Beispiel der aktuell eingestellte Fokuswert, von der Fokuseinstellvorrichtung an die Bedieneinheit übermittelt werden können.

Eine gattungsgemäße Bedieneinheit ist beispielsweise in WO 2010/046237 A1 offenbart. Die dort beschriebene, als Fernbedieneinheit ausgestaltete Bedieneinheit weist als Anzeigeeinrichtung einen in ein Gehäuse integrierten rechteckigen Flachbildschirm zur Anzeige einer Fokusskala und weiterer Parameter sowie ein seitlich am Gehäuse angeordnetes Handrad zum Einstellen des Fokus auf. Eine derartige Bedieneinheit bietet dem Kameraassistenten eine zweckmäßige Benutzeroberfläche und gegenüber einer Verstellung am Objektivring die Vorteile einer bequemeren Bedienposition, einer feineren Übersetzung der Bedienbewegung bei der Fokusverstellung, die Anzeige von Zusatzinformation, wie beispielsweise die jeweilige Tiefenschärfe, sowie die Möglichkeit der Markierung bestimmter Entfernungseinstellungen, die beispielsweise mit ausgemessenen Abständen im Motiv übereinstimmen. Die Bedienung einer derartigen Bedieneinheit ist jedoch aufgrund der räumlichen und logischen Trennung des Handrads von der Anzeigeeinrichtung nicht immer intuitiv.

Es ist daher die Aufgabe der Erfindung, eine Bedieneinheit mit flexibler Nutzungsmöglichkeit und leichter Bedienbarkeit anzugeben.

Die Lösung erfolgt durch die Merkmale des Anspruchs 1 und insbesondere dadurch, dass die elektronische Anzeigeeinrichtung die Form eines Zylinders oder eines Zylindersektors besitzt, dessen Achse mit der Drehachse des Bedienelements zusammenfällt oder parallel hierzu verläuft.

Die Anzeigeeinrichtung weist demnach eine Wölbung auf, wobei die Symbolanordnung sich in Umfangsrichtung über die Anzeigeeinrichtung erstreckt. Da das drehbare Bedienelement typischerweise eine Zylinderform besitzt, kann die Wölbung der Anzeigeeinrichtung dem dem Benutzer zugewandten, ebenfalls gewölbten Abschnitt des drehbaren Bedienelements entsprechen. Die Anzeigeeinrichtung kann beispielsweise als Mantelfläche eines Zylinders (d.h. als Hohlzylinder) einen Teil des drehbaren Bedienelements umfänglich umgeben. Es ist allerdings ausreichend, wenn die Anzeigeeinrichtung lediglich einem Zylindersektor entspricht, d.h. in Umfangsrichtung begrenzt ist. In beiden Fällen verläuft die Achse der Zylinderform der elektronischen Anzeigeeinrichtung vorzugsweise koaxial zu der Drehachse des Bedienelements. Alternativ können die beiden Achsen allerdings auch versetzt zueinander sein.

Die an der elektronischen Anzeigeeinrichtung dargestellte Symbolanordnung befindet sich in räumlicher Nähe zum Bedienelement, sodass eine intuitive und dennoch flexible Zuordnung einzelner Symbole der Symbolanordnung zum drehbaren Bedienelement gegeben ist. Im Vergleich zu einer fest aufgedruckten oder eingeprägten Symbolanordnung oder Skala ergeben sich aufgrund der elektronischen Anzeigeeinrichtung eine Vielzahl von Möglichkeiten, den Bedienkomfort für den Benutzer noch weiter zu erhöhen, was nachfolgend anhand von bevorzugten Ausführungsbeispielen noch näher erläutert wird.

Gemäß einer bevorzugten Ausführungsform der Erfindung ist die elektronische Anzeigeeinrichtung nicht leuchtend, wobei die elektronische Anzeigeeinrichtung vorzugsweise ein elektronisches Papier ist. Derartige nichtleuchtende oder passive Anzeigeeinrichtungen zeichnen sich durch einen geringen Stromverbrauch und eine gute, weitgehend blickwinkelunabhängige Ablesbarkeit sowohl bei normalem Raumlicht als auch in hellem Sonnenschein aus. Bei dem elektronischen Papier kann es sich beispielsweise um eine auf dem Prinzip der Elektrophorese basierende Anzeigeeinrichtung handeln. Ein derartiges elektronisches Papier ist auch unter dem Namen "E-Ink" bekannt und enthält Mikrokapseln, die z.B. positiv geladene weiße Partikel und negativ geladene schwarze Partikel in einem transparenten zähflüssigen Polymer enthalten. Die Darstellung wird durch kurzzeitiges Anlegen einer elektrischen Spannung verändert und bleibt dann über einen längeren Zeitraum stabil, ohne dass ständig eine Spannung anliegen oder ein Strom fließen muss. Elektronische Papiere ermöglichen auf besonders einfache Weise die Herstellung von gewölbten Anzeigeeinrichtungen.

Vorzugsweise ist an dem Basisteil eine der elektronischen Anzeigeeinrichtung zugeordnete Ablesemarke vorgesehen, wobei die Relativposition der an der elektronischen Anzeigeeinrichtung dargestellten Symbolanordnung in Bezug auf die Ablesemarke einen Einstellwert definiert, und wobei das genannte Steuersignal den Einstellwert enthält. Somit wird derjenige Einstellwert an einen Empfänger übermittelt, der dem mit der Ablesemarke übereinstimmenden Symbol entspricht. Alternativ kann die Ablesemarke auch elektronisch oder als aufgedruckte Markierung auf der elektronischen Anzeigeeinrichtung dargestellt sein.

Die Bedieneinheit kann ferner eine Eingabeeinrichtung (z.B. Taste) umfassen, mittels derer der Benutzer einen Auswahlbefehl an die Steuereinrichtung übermitteln kann. Die Steuereinrichtung kann in Ansprechen auf einen derartigen Auswahlbefehl insbesondere ein zusätzliches Symbol (z.B. Markierung) an der Anzeigeeinrichtung darstellen oder das genannte Steuersignal erzeugen und ausgeben.

Bevorzugt umfasst das Steuersignal zumindest ein Fokussteuersignal zum Steuern einer Fokuseinstellvorrichtung einer Laufbildkamera, wobei die Steuereinrichtung angepasst ist, das Fokussteuersignal an die Fokuseinstellvorrichtung zu übermitteln, und wobei die Symbolanordnung eine Fokusskala umfasst. Somit ähnelt die auf der Anzeigeeinrichtung dargestellte Fokusskala der üblicherweise auf den Objektivring aufgedruckten Fokusskala. Da die Drehachse des bevorzugt ebenfalls zylinderförmigen Bedienelements mit der Achse der zylinderförmigen Anzeigeeinrichtung zusammenfällt oder zumindest parallel hierzu verläuft, ergibt sich eine besonders intuitive Bedienung, die der Bedienung eines unmittelbar am Kameraobjektiv vorgesehenen Objektivrings nachempfunden ist.

Grundsätzlich sind auch verschiedene andere Anwendungen bei einer Laufbildkamera möglich. Alternativ oder zusätzlich kann beispielsweise auch ein Blendensteuersignal oder ein Brennweitensteuersignal zur Steuerung einer Blendeneinstellvorrichtung bzw. einer Brennweiteneinstellvorrichtung (Zoomvorrichtung) einer Laufbildkamera mithilfe des genannten Bedienelements oder eines jeweiligen zusätzlichen, einer weiteren Anzeigeeinrichtung zugeordneten Bedienelements erzeugt werden, wobei die Symbolanordnung dann eine entsprechende Blendenwert- bzw. Brennweitenskala umfasst.

Weiterhin sind auch Anwendungen im Bereich der Kraftfahrzeugtechnik, der Luft- oder Schifffahrt denkbar.

Bevorzugt umfasst die Fokusskala mehrere Entfernungswerte und wenigstens eine durch einen Benutzer frei wählbare Fokuswertmarkierung. Die Entfernungswerte können dabei in Form von beschrifteten und unbeschrifteten Skalenstrichen dargestellt werden. Die beispielsweise durch Pfeilsymbole darstellbaren Fokuswertmarkierungen ermöglichen es dem Benutzer, auf einfache Weise ein oder mehrere beispielsweise durch Ausmessen des Motivs vorbestimmte Fokuswerte mit Hilfe des Bedienelements einzustellen. Bevorzugt können mehrere (z.B. graphisch unterschiedliche) Fokuswertmarkierungen in die Fokusskala eingefügt werden.

Gemäß einer vorteilhaften Ausführungsform weist die an der elektronischen Anzeigeeinrichtung dargestellte Fokusskala einen Bereich von mehreren Entfernungswerten auf, der durch einen Benutzer einstellbar ist. Der einstellbare Bereich kann den gesamten Einstellbereich des zugeordneten Kameraobjektivs umfassen. Alternativ kann der einstellbare Bereich aber auch lediglich einen oder mehrere Teilbereiche des Entfernungswertebereichs des Objektivs umfassen. Falls beispielsweise die in einem Motiv ausgemessenen zu fokussierenden Abstände nur innerhalb eines sehr kleinen Bereichs liegen, kann die auf der elektronischen Anzeigeeinrichtung dargestellte Fokusskala ungefähr auf diesen Tiefenbereich aufgespreizt werden, so dass eine besonders feinfühlige Einstellung des Fokuswerts möglich ist.

Gemäß einer weiteren bevorzugten Ausführungsform der Erfindung ist auch die elektronische Anzeigeeinrichtung relativ zum Basisteil drehbar, wobei die elektronische Anzeigeeinrichtung vorzugsweise drehfest mit dem drehbaren Bedienelement gekoppelt ist. Hierbei drehen sich die Symbolanordnung bzw. die Fokusskala und insbesondere auch die Fokuswertmarkierungen gemeinsam mit dem Bedienelement. Die Drehgeschwindigkeiten der Anzeigeeinrichtung bzw. des Bedienelements können gleich oder unterschiedlich sein, wobei letzteres z.B. durch ein zwischen Anzeigeeinrichtung und Bedienelement wirksames Getriebe realisiert werden kann, so dass anstelle einer drehfesten Kopplung eine drehwirksame Kopplung vorliegt.

Alternativ ist die elektronische Anzeigeeinrichtung drehfest mit dem Basisteil gekoppelt, wobei die Steuereinrichtung angepasst ist, eine Winkelposition der dargestellten Symbolanordnung relativ zu der elektronischen Anzeigeeinrichtung in Abhängigkeit von der erfassten Winkelposition oder der Winkelpositionsänderung des Bedienelements zu ändern. Mit anderen Worten ist die Steuereinrichtung dazu angepasst, die elektronische Anzeigeeinrichtung derart zum Darstellen der Symbolanordnung anzusteuern, dass die dargestellte Symbolanordnung einer Drehung des Bedienelements relativ zum Basisteil folgt (mit derselben oder einer anderen Drehgeschwindigkeit). Die Anzeigeeinrichtung ist demnach ortsfest in Bezug auf das Basisteil, so dass sich die Symbolanordnung (z.B. Fokusskala und Fokuswertmarkierungen) bei einer Drehung des Bedienelements rein virtuell dreht, also ihre Darstellung oder Relativposition auf der Anzeigeeinrichtung in Umfangsrichtung verschoben wird.

Bei den beiden vorgenannten Ausführungsformen wird erreicht, dass eine Drehung des Bedienelements relativ zum Basisteil eine Drehung der Symbolanordnung (z.B. Fokusskala und Fokuswertmarkierungen) relativ zum Basisteil bewirkt.

Gemäß einer weiteren bevorzugten Ausführungsform ist die Steuereinrichtung angepasst, das Maß der Änderung der Winkelposition der dargestellten Symbolanordnung als Produkt aus der erfassten Winkelpositionsänderung des Bedienelements und einem Skalierungsfaktor festzulegen, wobei der Skalierungsfaktor bevorzugt durch einen Benutzer frei einstellbar ist. Hierdurch lässt sich sozusagen ein "elektronisches Getriebe" realisieren, dessen Übersetzungsfaktor vorzugsweise durch den Benutzer geändert werden kann. Wenn der Skalierungsfaktor gleich 1 ist, bewegen sich das Bedienelement und die Symbolanordnung (z.B. Fokusskala) synchron zueinander. Durch die Auswahl eines von 1 verschiedenen Faktors ist es aber auch möglich, sozusagen eine Über- oder Untersetzung zwischen der Bewegung der Fokusskala und des Bedienelements herzustellen. Dadurch können einerseits kleine Winkelpositionsänderungen des Bedienelements in große Winkeländerungen der Symbolanordnung bzw. Fokusskala und damit in große Änderungsraten des Einstellwerts bzw. Fokussollwerts umgesetzt werden, um etwa schnelle Fokusänderungen über einen großen Bereich durchführen zu können, und andererseits große Winkelpositionsänderungen des Bedienelements in kleine Winkeländerungen der Symbolanordnung bzw. Fokusskala umgesetzt werden, um etwa ein besonders feinfühliges Einstellen des Fokus zu ermöglichen.

Vorzugsweise ist die Steuereinrichtung zum Speichern und Abrufen von benutzerdefinierten Einstellungen der Symbolanordnung angepasst. Diese Einstellungen können beispielsweise die Positionen von zuvor definierten Fokuswertmarkierungen, den auf der Fokusskala darzustellenden Entfernungswertebereich oder den vorstehend erläuterten Skalierungsfaktor umfassen. Zu diesem Zweck kann die Steuereinrichtung einen nichtflüchtigen Speicher aufweisen. Somit kann der Benutzer eine Vielzahl von Datensätzen erstellen und abspeichern, die zu einem späteren Zeitpunkt bei Bedarf wieder abgerufen werden können und somit nicht erneut generiert werden müssen.

Gemäß einer weiteren vorteilhaften Ausführungsform umfasst das Basisteil ein Griffteil, welches eine Aufnahme für wenigstens einen Energiespeicher (z.B. Batterie) zur Versorgung der Bedieneinheit mit elektrischer Leistung aufweist. Zumindest während des Betriebs ergreift der Benutzer die Bedieneinheit am Griffteil und umfasst damit indirekt auch den Energiespeicher. Aufgrund der Körperwärme des Benutzers erwärmt sich dadurch der Energiespeicher, was insbesondere bei niedrigen Außentemperaturen die Leistungsfähigkeit des Energiespeichers erhöht.

Vorzugsweise weist das Basisteil eine Beleuchtungseinrichtung zum Beleuchten zumindest eines Teilbereichs der elektronischen Anzeigeeinrichtung mit Auflicht auf. Die Beleuchtung der Anzeigeeinrichtung ermöglicht eine Benutzung der Bedieneinheit auch bei Dunkelheit. Bei einer Beschränkung der Beleuchtung auf einen dem Benutzer zugewandten Teilbereich der elektronischen Anzeigeeinrichtung kann eine Störung der Umgebung vermieden werden. Insbesondere bei der erläuterten Anwendung für eine Laufbildkamera kann bei einer gewöhnlichen Benutzungssituation, bei welcher der Benutzer der Bedieneinheit der aufzunehmenden Szene zugewandt ist und die Anzeigeeinrichtung dem Benutzer zu- und damit der Szene abgewandt ist, eine Beeinträchtigung der Szene durch Blendlicht oder Störlicht vermieden werden.

Gemäß einer weiteren vorteilhaften Ausführungsform der Erfindung ist die Steuereinrichtung wahlweise in einen Fokussteuermodus oder in einen Konfigurationsmodus schaltbar, wobei die Steuereinrichtung angepasst ist, in dem Fokussteuermodus die elektronische Anzeigeeinrichtung zum Darstellen der Symbolanordnung (z.B. Fokusskala) anzusteuern, die Winkelposition oder Winkelpositionsänderung des Bedienelements zu erfassen und das Steuersignal (z.B. Fokussteuersignal) an die zugeordnete Funktionseinheit (z.B. Fokuseinstellvorrichtung) zu übermitteln, und wobei die Steuereinrichtung angepasst ist, in dem Konfigurationsmodus die elektronische Anzeigeeinrichtung zum Darstellen eines Konfigurationsmenüs anzusteuern, welches das Einstellen von Betriebsparametern der Bedieneinheit ermöglicht. Die Darstellung des Konfigurationsmenüs und der Symbolanordnung (z.B. Fokusskala) können in demselben Bereich der elektronischen Anzeigevorrichtung erfolgen. Somit ist es nicht notwendig, eine besonders großflächige Anzeigeeinrichtung vorzusehen, welche den Benutzer durch Darstellung einer Vielzahl von Informationen unnötig verwirrt.

Bei einer Anwendung für eine Laufbildkamera weist die Bedieneinheit bevorzugt eine (oder die bereits genannte) Eingabeeinrichtung zum Eingeben eines Auswahlbefehls an die Steuereinrichtung auf, wobei die Steuereinrichtung angepasst ist, eine auf der Fokusskala darstellbare Fokuswertmarkierung in Abhängigkeit von dem angegebenen Auswahlbefehl festzulegen. So kann beispielsweise der aktuell eingestellte Fokuswert als Fokuswertmarkierung übernommen werden. Es ist nicht zwingend notwendig, zum Festlegen der Fokuswertmarkierung den genannten Konfigurationsmodus zu aktivieren.

Bevorzugt ist zwischen dem Basisteil und dem drehbaren Bedienelement eine wahlweise deaktivierbare Rastung vorgesehen. Beispielsweise kann vorgesehen sein, die Rastung im Konfigurationsmodus für eine präzise Steuerung der Konfigurationsmenüs zu aktivieren und im Fokussteuermodus für eine möglichst feinfühlige Fokuseinstellung zu deaktivieren.

Gemäß einer weiteren vorteilhaften Ausführungsform ist das Bedienelement zusätzlich zwischen wenigstens zwei Axialpositionen verstellbar, wobei die Bedieneinheit einen weiteren Positionsgeber zum Erfassen der Axialposition des Bedienelements aufweist. Beispielsweise kann die genannte Rastung durch ein axiales Verstellen des Bedienelements aktiviert oder deaktiviert werden, wobei bevorzugt die Rastung auch eine Rastung der Axialposition umfasst. Alternativ oder zusätzlich kann das Verstellen zwischen den Axialpositionen auch eine Tastfunktion umfassen, so dass beispielsweise ein Druck in axialer Richtung auf das Bedienelement je nach ausgewähltem Modus der Steuereinrichtung das Setzen einer Fokuswertmarkierung oder das Aktivieren eines Menüpunkts erfolgt. In dem Fall erfüllt das axial verstellbare Bedienelement die Funktion der vorstehend genannten Eingabeeinrichtung. Alternativ kann die Eingabeeinrichtung auch durch eine an der Stirnseite des Bedienelements vorgesehene Taste realisiert sein.

Vorzugsweise kann die Bedieneinheit wenigstens einen verstellbaren oder festen Anschlag aufweisen, welcher den Winkelpositionsbereich des Bedienelements begrenzt.

Weitere vorteilhafte Ausführungsformen der Erfindung sind in den Unteransprüchen, der Beschreibung und den Zeichnungen genannt.

Die Erfindung wird nachfolgend anhand eines Ausführungsbeispiels mit Bezug auf die Zeichnungen erläutert. Es zeigen:
- Fig. 1 bis 3: Ansichten einer erfindungsgemäßen Bedieneinheit in verschiedenen Betriebsmodi, und
- Fig. 4: ein Blockschaltbild der in Fig. 1 bis 3 gezeigten Bedieneinheit.

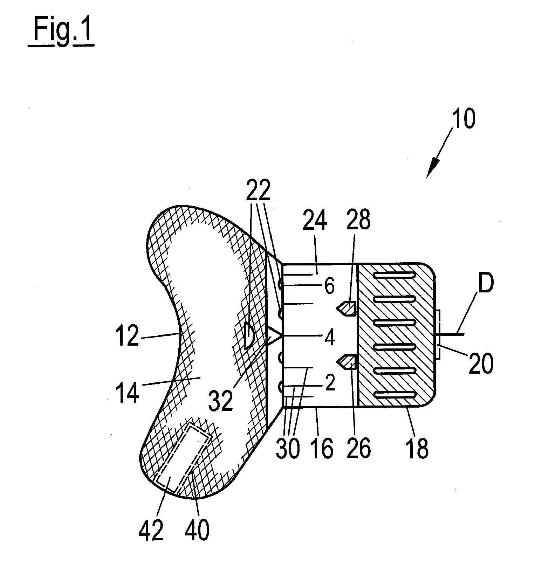

Eine erfindungsgemäße, als Fernbedieneinheit 10 ausgestaltete Bedieneinheit umfasst gemäß Fig. 1 bis 3 ein Basisteil 12, welches ein ergonomisch geformtes Griffteil 14 aufweist. Seitlich am Basisteil 12 ist eine zylinderförmige, passive elektronische Anzeigeeinrichtung 16 angeordnet, die unmittelbar an das Basisteil 12 angrenzt. Dem Basisteil 12 gegenüberliegend an die Anzeigeeinrichtung 16 angrenzend ist ein ebenfalls zylinderförmiges Bedienelement 18 angeordnet, dessen Mantelfläche zur Verbesserung des Bedienkomforts strukturiert sein kann. Das Basisteil 12 oder das Bedienelement 18 kann in die (vorzugsweise hohlzylindrische) elektronische Anzeigeeinrichtung 16 hineinragen.

Das Bedienelement 18 ist relativ zum Basisteil 12 um eine Drehachse D drehbar. Die Achse der zylinderförmigen Anzeigeeinrichtung 16 fällt mit der Drehachse D zusammen. Die Mantelfläche des Bedienelements 18 (d.h. die umfängliche Außenseite des Bedienelements 18) und die Mantelfläche der elektronischen Anzeigeeinrichtung 16 schließen beispielsweise bündig aneinander, wie in Fig. 1 bis 3 gezeigt ist. An einer Stirnfläche des Bedienelements 18 kann eine gestrichelt dargestellte Taste 20 als Eingabeeinrichtung vorgesehen sein.

Im vorliegenden Ausführungsbeispiel ist die Anzeigeeinrichtung 16 drehfest am Basisteil 12 angeordnet. Gemäß einer Abwandlung kann die Anzeigeeinrichtung 16 stattdessen auch drehfest mit dem Bedienelement 18 gekoppelt sein, so dass sich die Anzeigeeinrichtung 16 und das Bedienelement 18 gemeinsam relativ zum Basisteil 12 verdrehen lassen.

Die Anzeigeeinrichtung 16 kann, wie im dargestellten Ausführungsbeispiel, die Form eines Zylinders aufweisen und sich zumindest annähernd über einen Winkelbereich von 360° erstrecken. Alternativ kann die Anzeigeeinrichtung 16 auch die Form eines Zylindersektors aufweisen und sich beispielsweise über einen Winkelbereich von nur 180° oder auch lediglich 120° erstrecken.

Im Inneren des Griffteils 14 ist ein von außen zugängliches, gestrichelt dargestelltes Batteriefach 40 als Aufnahme für eine als Energiespeicher dienende Batterie 42 vorgesehen.

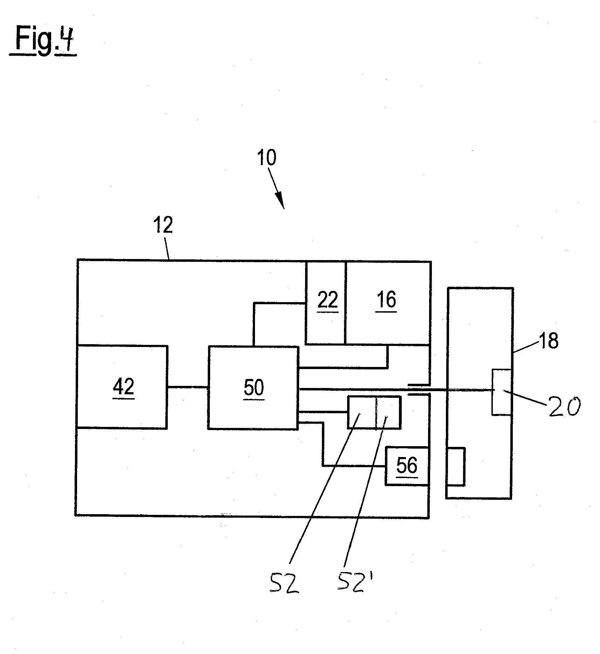

Die Fernbedieneinheit 10 weist zudem eine im Bereich des Basisteils 12 vorgesehene Steuereinrichtung (nicht dargestellt) auf, welche zur drahtlosen Kommunikation mit einer Fokuseinstellvorrichtung einer Laufbildkamera (nicht dargestellt) ausgebildet ist. Zu diesem Zweck ist die Steuereinrichtung mit einer Funksendeeinrichtung oder einer Funksende- und -empfangseinrichtung verbunden. Die Steuereinrichtung ist ferner mit einem Positionsgeber 52 (Fig. 4) zum Erfassen einer Winkelposition oder einer Winkelpositionsänderung des Bedienelements 18 relativ zum Basisteil 12, mit der elektronischen Anzeigeeinrichtung 16 und gegebenenfalls mit der Taste 20 verbunden.

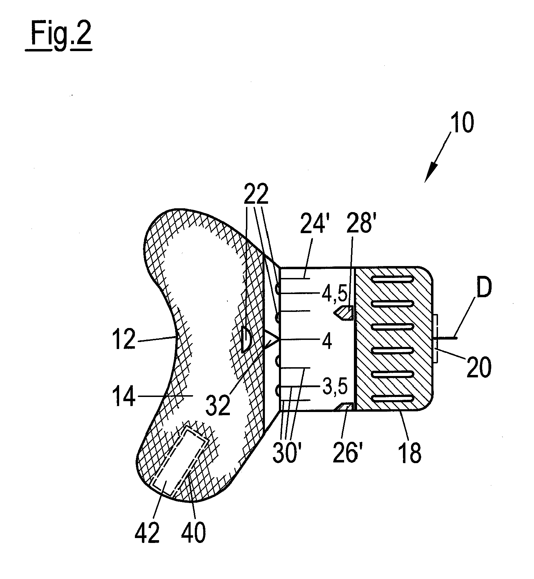

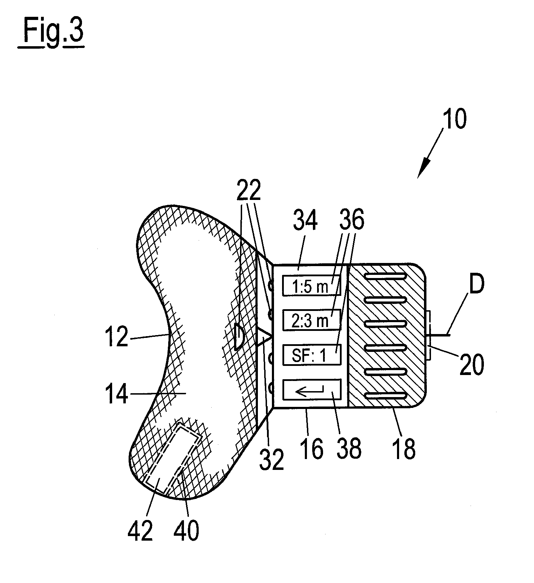

Die Steuereinrichtung ist ausgebildet, in Abhängigkeit von der erfassten Winkelposition oder Winkelpositionsänderung des Bedienelements 18 ein Fokussteuersignal an die Fokuseinstellvorrichtung zu übermitteln. Die Steuereinrichtung ist ferner dazu ausgelegt, in einem jeweiligen Fokussteuermodus die elektronische Anzeigeeinrichtung 16 zum Darstellen einer Fokusskala 24, 24' (Fig. 1 und 2) bzw. in einem Konfigurationsmodus zum Darstellen eines Konfigurationsmenüs 34 (Fig. 3) anzusteuern.

Die Fokusskala 24, 24' umfasst verschiedene Entfernungswerte 30, 30' welche in Form von beschrifteten und unbeschrifteten, unterschiedlich langen Skalenstrichen dargestellt sind. Die Entfernungswerte 30, 30' sind auf der dem Basisteil 12 zugewandten Seite der Anzeigeeinrichtung 16 angeordnet (Fig. 1 und 2).

Weiterhin umfasst die Fokusskala 24, 24' jeweils zwei Fokuswertmarkierungen 26, 28 bzw. 26', 28'. Die Fokuswertmarkierungen 26, 26', 28, 28' sind auf der dem Bedienelement 18 zugewandten Seite der Anzeigeeinrichtung 16 dargestellt, können jedoch auch an beliebiger anderer Stelle vorgesehen sein, insbesondere auch an der dem Basisteil 12 zugewandten Seite der Anzeigeeinrichtung 16. Sie dienen als Merkhilfen und ermöglichen es dem Benutzer, die Fokuseinstellung schnell und zielsicher zwischen mehreren gewünschten Fokussollwerten zu verstellen.

Eine am Basisteil 12 vorgesehene pfeilförmige Ablesemarke 32 ermöglicht das Ablesen eines bestimmten Entfernungswerts, welcher als Fokussollwert oder Fokuseinstellwert von der Steuereinrichtung an die Fokuseinstellvorrichtung der Laufbildkamera übermittelt wird.

Am Basisteil 12 sind ferner mehrere Leuchtdioden (LEDs) 22 als Auflicht-Beleuchtungseinrichtung zur Beleuchtung der elektronischen Anzeigeeinrichtung 16 vorgesehen. Der von den Leuchtdioden 22 beleuchtete Bereich umfasst auch die Ablesemarke 32, so dass auch bei Dunkelheit eine zuverlässige Bedienung der Fernbedieneinheit 10 gewährleistet ist.

Ein Setzen oder Definieren der Fokuswertmarkierungen 26, 26', 28, 28' kann durch ein Betätigen der Taste 20 erfolgen. Alternativ kann dies auch durch ein Niederdrücken des Bedienelements 18 axial zur Drehachse D erfolgen, wobei in dem Fall ein zusätzlicher Positionsgeber 52' (Fig. 4) oder ein Taster im Inneren der Fernbedieneinheit 10 angeordnet ist.

Wie ein Vergleich der Fig. 1 und 2 zeigt, ist es möglich, auf den Fokusskalen 24, 24' unterschiedliche Bereiche von Entfernungswerten 30, 30' darzustellen.

Bei dem in Fig. 1 dargestellten Fokussteuermodus umfasst die Fokusskala 24 den gesamten Entfernungswertebereich, der am Kameraobjektiv eingestellt werden kann. Aufgrund der Perspektive ist in Fig. 1 jedoch nur ein Teilabschnitt der Fokusskala 24 sichtbar, der Entfernungswerte 30 zwischen ca. 1 m und ca. 7 m umfasst. Die Fokuswertmarkierungen 26, 28 sind bei etwa 3 m bzw. 5 m gesetzt.

Bei dem Fokussteuermodus gemäß Fig. 2 ist auf der Fokusskala 24' lediglich ein Teilbereich des gesamten Entfernungswertebereichs dargestellt. In dem in Fig. 2 aufgrund der Perspektive sichtbaren Teilabschnitt der aufgespreizten Fokusskala 24' liegen die Entfernungswerte 30' zwischen ca. 3,25 m und ca. 4,75 m. Die Fokuswertmarkierungen 26', 28' sind bei etwa 3 m bzw. 4,25 m gesetzt.

Ein Vergleich von Fig. 1 und 2 zeigt, dass im Fokussteuermodus gemäß Fig. 2 eine feinfühligere Einstellung des Fokussollwerts möglich ist, jedoch nicht der gesamte mögliche Entfernungswertebereich angefahren werden kann. Dies kann jedoch dadurch kompensiert werden, dass Mehrfachumdrehungen (also mehr als 360°) des Bedienelements 18 zugelassen werden und jeweils ein anderer Teilbereich des gesamten Entfernungswertebereichs als Fokusskala 24' dargestellt wird. Demgegenüber steht im Betriebsmodus gemäß Fig. 1 der gesamte Entfernungswertebereich zur Verfügung, wobei jedoch die Präzision gegenüber dem Betriebsmodus von Fig. 2 geringer ist.

Gemäß einer Abwandlung der erfindungsgemäßen Fernbedieneinheit 10 kann vorgesehen sein, dass das Maß der Änderung der Winkelposition der dargestellten Fokusskala 24, 24'der erfassten, mit einem Skalierungsfaktor multiplizierten Winkelpositionsänderung des Bedienelements 18 entspricht. Der Skalierungsfaktor kann durch den Benutzer eingestellt werden. Die Auswirkungen verschiedener Skalierungsfaktoren werden nachfolgend beispielhaft erläutert.

Bei einem Skalierungsfaktor von 1 verschiebt sich die Fokusskala 24, 24' in Bezug auf die Ablesemarke 32 synchron zu einer Drehung des Bedienelements 18.

Bei einem Skalierungsfaktor von 0,5 führt eine Winkelpositionsänderung des Bedienelements 18 von 20° zu einer Änderung der Winkelposition der Fokusskala 24, 24' von 10°.

Entsprechend führt bei einem Skalierungsfaktor von 2 eine Winkelpositionsänderung des Bedienelements 18 von 20° zu einer Änderung der Winkelposition der Fokusskala 24, 24' von 40°.

Somit bewirkt ein Skalierungsfaktor kleiner 1 eine Untersetzung, welche ein feinfühliges Einstellen des Fokussollwerts ermöglicht, während ein Skalierungsfaktor großer 1 eine Übersetzung bewirkt, welche eine hohe Änderungsrate des Fokussollwerts ermöglicht.

Fig. 3 zeigt die Fernbedieneinheit 10 im Konfigurationsmodus. Auf der Anzeigeeinrichtung 16 ist anstelle der Fokusskalen 24, 24' ein beispielhaftes Konfigurationsmenü 34 dargestellt. In diesem Konfigurationsmenü 34 werden drei verschiedene Betriebsparameter 36, welche die den Fokuswertmarkierungen 26, 28 (Fig. 1) zugeordneten Fokuswerte sowie den vorstehend genannten Skalierungsfaktor umfassen, sowie ein Menübefehl 38 angezeigt.

Wenn einer der dargestellten Betriebsparameter 36 bearbeitet oder gelöscht werden soll, kann dieser durch Drehen des Bedienelements 18 ausgewählt werden und durch Betätigen der Taste 20 bzw. durch Niederdrücken des Bedienelements 18 die betreffende Bearbeitungsfunktion durchgeführt bzw. ein entsprechendes Untermenü des Konfigurationsmenüs 34 ausgewählt werden. Eine Navigation durch entsprechende Menüebenen ist durch Auswählen und Aktivieren eines entsprechenden Menübefehls 38 möglich.

Fig. 4 zeigt ein Blockschaltbild mit den wesentlichen Bestandteilen einer in Fig. 1 bis 3 dargestellten Bedieneinheit 10. Die Bedieneinheit 10 weist eine als Energiespeicher dienende Batterie 42 zur Versorgung der Bedieneinheit 10 mit elektrischer Leistung auf. Eine Steuereinrichtung 50 ist mit einem Positionsgeber 52 zum Erfassen der Drehstellung eines Bedienelements 18 relativ zu einem Basisteil 12 verbunden. Die Steuereinrichtung 50 kann mit einem weiteren Positionsgeber 52' zum Erfassen der Axialposition des Bedienelements 18 verbunden sein. Eine Beleuchtungseinrichtung 22 dient zum Beleuchten einer elektronischen Anzeigeeinrichtung 16. Diese kann, wie gezeigt, an dem Basisteil 12 angeordnet sein und von der Steuereinrichtung 50 entsprechend der Drehstellung des Bedienelements 18 gesteuert werden. Abweichend von der schematischen Darstellung in Fig. 4 besitzt die Anzeigeeinrichtung 16 die Form eines Zylinders oder eines Zylindersektors, wie im Zusammenhang mit Fig. 1 bis 3 erläutert.

Mittels einer am Bedienelement 18 vorgesehenen Taste 20 oder durch ein Niederdrücken des Bedienelements 18 können Auswahlbefehle an die Steuereinrichtung 50 übermittelt werden. Zwischen dem Basisteil 12 und dem drehbaren Bedienelement 18 ist eine wahlweise deaktivierbare Rastung 56 vorgesehen. Die Steuereinrichtung 50 erzeugt entsprechend der Drehstellung des Bedienelements 18 ein Steuersignal (z.B. Fokussteuersignal), das an eine Fokuseinstellvorrichtung einer zugeordneten Laufbildkamera übermittelt wird.

### Bezugszeichenliste

- 10: Fernbedieneinheit
- 12: Basisteil
- 14: Griffteil
- 16: Anzeigeeinrichtung
- 18: Bedienelement
- 20: Taste (Eingabeeinrichtung)
- 22: Leuchtdiode (Beleuchtungseinrichtung)
- 24, 24': Fokusskala
- 26, 26': Fokuswertmarkierung
- 28, 28': Fokuswertmarkierung
- 30, 30': Entfernungswert
- 32: Ablesewert
- 34: Konfigurationsmenü
- 36: Betriebsparameter
- 38: Menübefehl
- 40: Batteriefach
- 42: Batterie
- 50: Steuereinrichtung
- 52, 52': Positionsgeber
- 56: Rastung

- D: Drehachse

## Patentansprüche

1. Bedieneinheit zur Erzeugung eines Steuersignals, umfassend:
ein Basisteil (12),
ein um eine Drehachse relativ zum Basisteil (12) drehbares Bedienelement (18),
einen Positionsgeber (52) zum Erfassen einer Winkelposition oder
einer Winkelpositionsänderung des Bedienelements (18) relativ zum Basisteil (12),
eine Steuereinrichtung (50), welche angepasst ist, in Abhängigkeit von der erfassten Winkelposition oder Winkelpositionsänderung des Bedienelements (18) das Steuersignal zu erzeugen, und
eine elektronische Anzeigeeinrichtung (16), wobei die Steuereinrichtung (50) angepasst ist, die elektronische Anzeigeeinrichtung (16) zum Darstellen zumindest einer Symbolanordnung anzusteuern,
**dadurch gekennzeichnet,**
**dass** die elektronische Anzeigeeinrichtung (16) die Form eines Zylinders oder eines Zylindersektors besitzt, dessen Achse mit der Drehachse des Bedienelements (18) zusammenfällt oder parallel hierzu verläuft.

2. Bedieneinheit nach Anspruch 1,
wobei die elektronische Anzeigeeinrichtung (16) nichtleuchtend ist,
wobei die die elektronische Anzeigeeinrichtung (16) vorzugsweise ein elektronisches Papier ist.

3. Bedieneinheit nach Anspruch 1 oder 2,
wobei die Bedieneinheit (10) als eine Fernbedieneinheit (10) für ein drahtgebundenes oder drahtloses Übermitteln des Steuersignals an eine Empfangseinheit ausgebildet ist.

4. Bedieneinheit nach einem der vorhergehenden Ansprüche,
wobei an dem Basisteil (12) eine der elektronischen Anzeigeeinrichtung (16) zugeordnete Ablesemarke (32) vorgesehen ist, wobei die Relativposition der an der elektronischen Anzeigeeinrichtung (16) dargestellten Symbolanordnung in Bezug auf die Ablesemarke (32) einen Einstellwert definiert, und wobei das genannte Steuersignal den Einstellwert enthält.

5. Bedieneinheit nach Anspruch 4,
wobei die Bedieneinheit (10) eine Eingabeeinrichtung (20) zum Eingeben eines Auswahlbefehls an die Steuereinrichtung (50) aufweist, wobei die Steuereinrichtung (50) angepasst ist, bei Betätigung der Eingabeeinrichtung (20) ein zusätzliches Symbol an der zu diesem Zeitpunkt erfassten Winkelposition der Symbolanordnung in Bezug auf die Ablesemarke (32) in der Symbolanordnung darzustellen.

6. Bedieneinheit nach einem der vorhergehenden Ansprüche,
wobei das Steuersignal zumindest ein Fokussteuersignal zum Steuern einer Fokuseinstellvorrichtung einer Laufbildkamera umfasst, wobei die Steuereinrichtung (50) angepasst ist, das Fokussteuersignal an die Fokuseinstellvorrichtung zu übermitteln, und wobei die Symbolanordnung eine Fokusskala (24, 24') umfasst.

7. Bedieneinheit nach Anspruch 6,
wobei die Fokusskala (24, 24') mehrere Entfernungswerte (30, 30') und wenigstens eine durch einen Benutzer definierbare Fokuswertmarkierung (26, 26', 28, 28') umfasst.

8. Bedieneinheit nach Anspruch 6 oder 7,
wobei die an der elektronischen Anzeigeeinrichtung (16) dargestellte Fokusskala (24, 24') einen Bereich von mehreren Entfernungswerten (30, 30') aufweist, der durch einen Benutzer einstellbar ist.

9. Bedieneinheit nach einem der Ansprüche 6 bis 8,
wobei die Steuereinrichtung (50) wahlweise in einen Fokussteuermodus oder in einen Konfigurationsmodus schaltbar ist, wobei die Steuereinrichtung (50) angepasst ist, in dem Fokussteuermodus die elektronische Anzeigeeinrichtung (16) zum Darstellen der Fokusskala (24, 24') anzusteuern, die Winkelposition oder Winkelpositionsänderung des Bedienelements (18) zu erfassen und das Fokussteuersignal an die Fokuseinstellvorrichtung zu übermitteln, und
wobei die Steuereinrichtung (50) angepasst ist, in dem Konfigurationsmodus die elektronische Anzeigeeinrichtung (16) zum Darstellen eines Konfigurationsmenüs (34) anzusteuern, welches das Einstellen von Betriebsparametern (36) der Bedieneinheit (10) ermöglicht.

10. Bedieneinheit nach einem der Ansprüche 6 bis 9,
wobei die Bedieneinheit (10) eine Eingabeeinrichtung (20) zum Eingeben eines Auswahlbefehls an die Steuereinrichtung (50) aufweist, wobei die Steuereinrichtung (50) angepasst ist, eine auf der Fokusskala (24, 24') darstellbare Fokuswertmarkierung (26, 26', 28, 28') in Abhängigkeit von dem eingegebenen Auswahlbefehl festzulegen.

11. Bedieneinheit nach einem der vorhergehenden Ansprüche, wobei die elektronische Anzeigeeinrichtung (16) drehfest mit dem drehbaren Bedienelement (18) gekoppelt ist;
oder
wobei die elektronische Anzeigeeinrichtung (16) drehfest mit dem Basisteil (12) gekoppelt ist, wobei die Steuereinrichtung (50) angepasst ist, eine Winkelposition der dargestellten Symbolanordnung relativ zu der elektronischen Anzeigeeinrichtung (16) in Abhängigkeit von der erfassten Winkelposition oder der Winkelpositionsänderung des Bedienelements (18) zu ändern.

12. Bedieneinheit nach einem der vorhergehenden Ansprüche,
wobei die Steuereinrichtung (50) angepasst ist, das Maß der Änderung der Winkelposition der dargestellten Symbolanordnung in Abhängigkeit von einem Produkt aus der erfassten Winkelpositionsänderung des Bedienelements (18) und einem Skalierungsfaktor festzulegen, wobei der Skalierungsfaktor bevorzugt durch einen Benutzer frei wählbar ist.

13. Bedieneinheit nach einem der vorhergehenden Ansprüche,
wobei die Steuereinrichtung (50) zum Speichern und Abrufen von benutzerdefinierten Einstellungen der Symbolanordnung angepasst ist.

14. Bedieneinheit nach einem der vorhergehenden Ansprüche,
wobei das Basisteil (12) ein Griffteil (14) umfasst, welches eine Aufnahme (40) für wenigstens einen Energiespeicher (42) zur Versorgung der Bedieneinheit (10) mit elektrischer Leistung aufweist; und/oder
wobei das Basisteil (12) eine Beleuchtungseinrichtung (22) zum Beleuchten zumindest eines Teilbereichs der elektronischen Anzeigeeinrichtung (16) mit Auflicht aufweist.

15. Bedieneinheit nach einem der vorhergehenden Ansprüche, wobei zwischen dem Basisteil (12) und dem drehbaren Bedienelement (18) eine wahlweise deaktivierbare Rastung (56) vorgesehen ist;
und/oder
wobei das Bedienelement (18) zusätzlich zwischen wenigstens zwei Axialpositionen verstellbar ist, wobei die Bedieneinheit (10) einen weiteren Positionsgeber (52') zum Erfassen der Axialposition des Bedienelements (18) aufweist.
